# EUROPEAN PATENT SPECIFICATION

(11) **EP 3 276 726 B1**
(45) Date of publication and mention of the grant of the patent: **11.12.2019**
(21) Application number: 16773326.0
(22) Date of filing: 16.03.2016
(51) Int. Cl.: H01M 8/04, H01M 8/06, H01M 8/0612, H01M 8/0662

(54) **FUEL CELL SYSTEM PROVIDED WITH ELECTRIC DEIONIZATION DEVICE**
BRENNSTOFFZELLENSYSTEM MIT EINER ELEKTRISCHEN DEIONISIERUNGSVORRICHTUNG
SYSTÈME DE PILE À COMBUSTIBLE DOTÉ D'UN DISPOSITIF DE DÉSIONISATION ÉLECTRIQUE

(30) Priority: 27.03.2015 KR 20150043123
(43) Date of publication of application: 31.01.2018
(73) Proprietor: Doosan Corporation, Seoul 04563 (KR)
(72) Inventor: KIM, Ho-Suk, Yongin-si Gyeonggi-do 17079 (KR); YU, Do-Hwan, Suwon-si Gyeonggi-do 16321 (KR); HONG, Byung-Sun, Seongnam-si Gyeonggi-do 13517 (KR); SHINN, Mee-Nam, Yongin-si Gyeonggi-do 17163 (KR)
(74) Representative: Krauns, Christian
(86) International application number: PCT/KR2016/002640
(87) International publication number: WO 2016/159545

(56) References cited:
- JP-A- 2005 129 237
- JP-A- 2006 114 413
- JP-A- 2007 175 647
- JP-B2- 4 954 926
- KR-A- 20090 094 161
- KR-A- 20130 037 513
- KR-A- 20140 083 248
- US-A1- 2003 059 663

## Description

### [Technical Field]

The present invention relates to a fuel cell system. More particularly, the present invention relates to a fuel cell system with an electrodeionization device for purifying water supplied to a reformer and a fuel cell stack.

### [Background Art]

Fuel cell systems using biogas and hydrocarbon fuels have recently been attracting attention as distributed power sources. Further, since the fuel cell system shows power generation efficiency of 35 % or more, thermal efficiency of 50 % or more, and total efficiency of 85 % or more, it is attracting attention as a high efficiency energy production device.

The fuel cell system includes a reformer that produces hydrogen from the hydrocarbon fuels. As a steam reforming reactor, the reformer reacts methane in the fuel gas with oxygen in a high-temperature atmosphere to produce hydrogen. A quantity of pure water required for a vapor water reformation reaction is supplied to the reformer, and conventionally, a filter-type water treatment method using an ion exchange resin material is mainly used.

However, since a composition (a type and a content of impurities) of the water that is supplied is not constant in various regions, an exchange cycle of the filter may be different for each region. Accordingly, in the filter-type water treatment method, it is difficult to collectively maintain the fuel cell system. Also, when water that is not purified is supplied to the reformer, since a scale of the impurities is generated inside the reformer, performance of the fuel cell system is deteriorated and the cycle-life is reduced.

The JP 2006/114413 A describes a management method in which the quality of recovered water is maintained at a prescribed level even if operated for a long time in a fuel cell generator. The electric conductivity of the recovered water is measured by an electric conductivity measuring sensor installed at the recovery tank, its detected signal is sent to a controller, and when the measured value exceeds a specified value, a part of the recovered water is discharged by opening a flow rate adjusting valve, and simultaneously, pure water of the same amount as that of discharged water is supplied from a pure water supply means to the recovery tank by opening the flow rate adjusting valve. The JP 4954926 B2 discloses a water treatment system including an electrodeionization apparatus and a control means for controlling the voltage applied to the electrodeionization apparatus, wherein the control means is constituted of a means which controls the applied voltage in accordance with the treatment capacity of the electrodeionization apparatus. The control means is constituted of a means which controls the applied voltage in accordance with the electric conductivity of the water treated by the electrodeionization apparatus or the value of the electric current flowing through the electrodeionization apparatus. The US 2003/059663 A1 discloses an apparatus for water treatment having an electrodeionization device to which power is supplied from a cell stack of a fuel cell. The direct current power is transformed in its voltage by a transformer and then supplied to the electrodeionization device without passing through an inverter.

### [DISCLOSURE]

### [Technical Problem]

The present invention provides a fuel cell system preventing a performance deterioration and a cycle-life reduction due to impurities by purify-processing the water supplied to the reformer for the vapor water reformation reaction and simultaneously monitoring water quality of the water in real time.

### [Technical Solution]

A fuel cell system according to an exemplary embodiment of the present invention includes: a reformer converting a fuel gas into a reformed gas rich in hydrogen; a fuel cell stack generating electricity by using the reformed gas; an electrodeionization device discharging pure water in which an impurity ion is removed from supplied water; a sensing unit measuring electrical conductivity of the pure water; a water supply unit supplying the pure water to the reformer and the fuel cell stack; and a control unit controlling the operation of the fuel cell stack depending on a measuring signal of the sensing unit. The fuel cell system further includes a fuel supply unit supplying the fuel gas to the reformer, and an air supply unit supplying air to the reformer and the fuel cell stack. The control unit stops the operation of the fuel supply unit, the water supply unit, and the air supply unit when a measuring signal of the sensing unit is a predetermined risk value or more

The electrodeionization device may include: a cell in which an ion exchange resin is filled between a positive ion exchange membrane and a negative ion exchange membrane; and a positive electrode and a negative electrode disposed at respective sides of the cell via a first space therebetween.

The positive electrode and the negative electrode may receive a fixed DC voltage from a power unit, and the first space may be controlled so that electrical conductivity of the pure water becomes 5 µS/cm to 10 µS/cm. On the other hand, the positive electrode and the negative electrode may receive a DC voltage varied by a transformer from the power unit, and the DC voltage may be controlled so that the electrical conductivity of the pure water becomes 5 µS/cm to 10 µS/cm.

The positive electrode and the negative electrode may receive a DC voltage, and the sensing unit may include a sensing circuit unit measuring a current amount flowing through the positive electrode and the negative electrode by a resistance to be converted into a voltage and then to be amplified. The sensing unit may include a sensing cell in contact with the pure water and having two electrodes receiving a DC voltage, and a sensing circuit unit measuring a current amount flowing through the two electrodes by a resistance to be converted into a voltage and then to be amplified.

The fuel cell system may further include a pre-treatment filter. The pre-treatment filter may be coupled in series to the electrodeionization device on the front of the electrodeionization device, and may firstly remove the impurity included in the supplied water.

### [Advantageous Effects]

The fuel cell system may monitor quality of the pure water discharged from the electrodeionization device in real time. Also, if the quality of the pure water exceeds a predetermined risk value, the operation of the fuel cell stack is automatically shut down, and accordingly, the occurrence of scale inside the reformer and the fuel cell stack may be prevented. Accordingly, the performance deterioration and the cycle-life reduction of the fuel cell system due to the impurity scale may be prevented.

### [Description of the Drawings]

FIG. 1 is a schematic diagram of a fuel cell system according to a first exemplary embodiment of the present invention.
FIG. 2 is a schematic diagram of an electrodeionization device among a fuel cell system shown in FIG. 1.
FIG. 3 is a schematic diagram showing a sensing unit among a fuel cell system shown in FIG. 1.
FIG. 4 is a schematic diagram of a fuel cell system according to a second exemplary embodiment of the present invention.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" means positioning on or below the object portion, and does not essentially mean positioning on the upper side of the object portion based on a gravity direction.

Throughout the specification, unless explicitly described to the contrary, the word "comprise" and variations such as "comprises" or "comprising" will be understood to imply the further inclusion of other elements. A size, a thickness, etc., of each component illustrated in the drawings are arbitrarily illustrated for convenience of explanation, and therefore the present invention is not limited thereto.

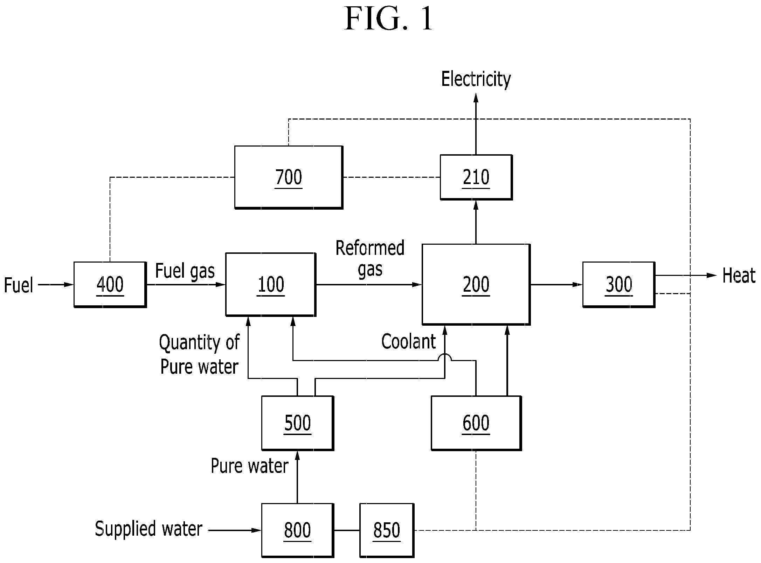

FIG. 1 is a schematic diagram of a fuel cell system according to a first exemplary embodiment of the present invention.

Referring to FIG. 1, the fuel cell system of the first exemplary embodiment includes a reformer 100 reforming a biogas or a hydrocarbon-based fuel gas into a reformed gas in which hydrogen is abundant, and a fuel cell stack 200 generating electricity by using the reformed gas.

The reformer 100 is a steam reforming reactor, and reacts methane among the fuel gas with oxygen in a high temperature atmosphere to be reformed into hydrogen. The reformer 100 includes a burner (not shown). The burner mixes and combusts a burner fuel and air to generate combustion heat and supplies the combustion heat to the reformer 100, thereby maintaining the reformer 100 at a high temperature required for vapor reformation.

The fuel cell stack 200 chemically reacts hydrogen among the reformed gas with oxygen among the air to generate the electricity and heat. The fuel cell is a highly efficient energy source that can be used permanently as long as hydrogen is continuously supplied, without emission or noise of polluting substances. The fuel cell stack 200 is connected to an inverter 210. The inverter 210 converts DC power of the fuel cell stack 200 into AC power.

The fuel cell stack 200 may be connected to a heat storage tank 300. The heat storage tank 300 receives and stores the heat generated from the fuel cell stack 200 by using a waste heat recovery device (not shown). In addition to producing the electricity, the fuel cell system can supply hot water or boiler working water to the user by utilizing the heat of the heat storage tank 300.

The fuel cell system includes a fuel supply unit 400, a water supply unit 500, an air supply unit 600, and a control unit 700.

The fuel supply unit 400 includes a fuel flow meter, a fuel boosting pump, and the like, and supplies the fuel gas to the reformer 100. The water supply unit 500 includes a water pump, a heat exchanger, and the like, supplies a quantity of pure water required for the vapor water reformation reaction to the reformer 100, and supplies coolant to the fuel cell stack 200.

The air supply unit 600 includes an air flow meter, an air pump, and the like, and supplies the air to the burner and the fuel cell stack 200. The control unit 700 is electrically connected to the fuel supply unit 400, the water supply unit 500, the air supply unit 600, and the inverter 210 to control operations thereof.

If the water supply unit 500 supplies water that is not purified to the reformer 100 and the fuel cell stack 200, the scale caused by impurities occurs in the reformer 100 and the fuel cell stack 200. This causes performance deterioration and cycle-life reduction of the fuel cell system.

Accordingly, the fuel cell system includes an electrodeionization device 800 that discharges pure water from which the impurity is removed by purifying and processing supplied water. The water supply unit 500 supplies the pure water discharged from the electrodeionization device 800 to the reformer 100 and the fuel cell stack 200.

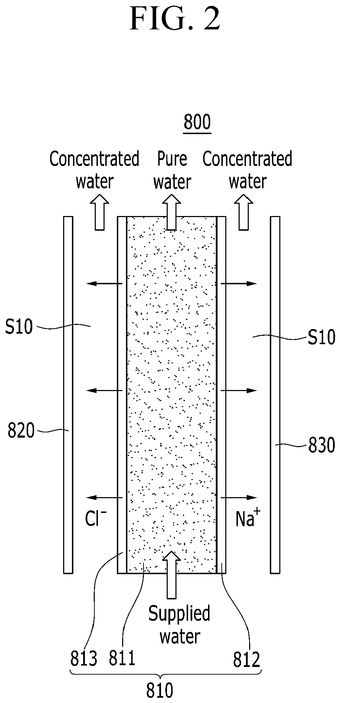

FIG. 2 is a schematic diagram of an electrodeionization device among a fuel cell system shown in FIG. 1.

Referring to FIG. 2, the electrodeionization device 800 includes a cell 810 configured of an ion exchange resin, a positive ion exchange membrane, and a negative ion exchange membrane, and a positive electrode 820 and a negative electrode 830 that are disposed outside the cell 810 at a predetermined distance from each other. The space between the positive electrode 820 and the cell 810 and the space between the negative electrode 830 and the cell 810 are referred to as a first space S10.

The cell 810 is filled with the ion exchange resin 811 between the positive ion exchange membrane 812 and the negative ion exchange membrane 813. The ion exchange resin 811 is made of a mixture of the positive ion exchange resin and the negative ion exchange resin. A polarity of the positive ion exchange membrane 812 is negative (-), and it is selectively permeable to positive ions. The polarity of the negative ion exchange membrane 813 is positive (+), and it is selectively permeable to negative ions.

The negative ion exchange membrane 813 faces the positive electrode 820, and the positive ion exchange membrane 812 faces the negative electrode 830. The positive electrode 820 and the negative electrode 830 are connected to a power unit (not shown) to receive DC power therefrom. The DC power may be 24 V or 48 V, however it is not limited thereto.

External water is supplied to the ion exchange resin 811 between the positive ion exchange membrane 812 and the negative ion exchange membrane 813, and the positive ion impurity and the negative ion impurity included in the supplied water respectively pass through the positive ion exchange membrane 812 and the negative ion exchange membrane 813 by electrical attraction. Thus, the stream of the supplied water is separated into a stream of pure water and a stream of concentrated water flowing through the first space S10.

Although not shown, the electrodeionization device 800 includes a circulation pump again supplying the external supplied water and the concentrated water exhausted through the first space S10 into the first space S10. The pure water exhausted through the ion exchange resin 811 is supplied to the reformer 100 as a fixed quantity of pure water and is supplied to the fuel cell stack 200 as coolant.

If electrical conductivity of the pure water is measured, an impurity content of the pure water may be predicted. That is, the electrical conductivity of the pure water is dependent on the impurity content. The above-described electrodeionization device 800 is configured to satisfy a condition that the electrical conductivity of the discharged pure water is 5 µS/cm to 10 µS/cm. In a unit of the electrical conductivity, S represents Siemens.

For example, the electrodeionization device 800 may control the width of first space S10 in a state that the DC power is fixed as a predetermined value to adjust the electrical conductivity of the discharged pure water to the above numerical range. As the width of the first space S10 decreases, the electrical attraction increases such that the transmittance of the ion impurity increases, thereby lowering the electrical conductivity of the pure water.

In detail, in the process of manufacturing the electrodeionization device 800, the width of the first space S10 may be designed and controlled to adjust the electrical conductivity of the discharged pure water to the above-described range by considering physical characteristics of materials configuring the cell 810 and the voltage value of the DC power.

On the other hand, the electrodeionization device 800 may control the voltage value applied to the power unit to match the electrical conductivity of the discharged pure water to the above-described numerical range. As the voltage applied to the power unit increases, the electrical attraction increases such that the transmittance of the ion impurity increases, and accordingly the electrical conductivity of the pure water may be lowered. In this case, the electrodeionization device 800 may include a transformer (not shown) connected to the power unit.

Again referring to FIG. 1, the fuel cell system includes a sensing unit 850 measuring the electrical conductivity of the pure water discharged from the electrodeionization device 800 in real-time. Also, the control unit 700 is electrically connected to the sensing unit 850 to control the operation of the fuel cell stack 200 depending on the output signal of the sensing unit 850.

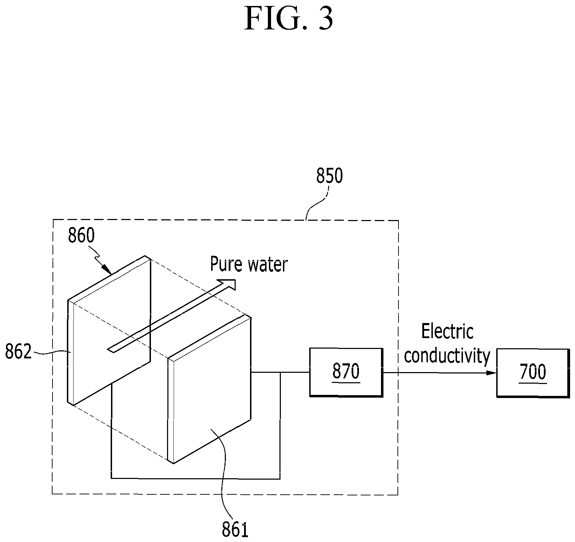

FIG. 3 is a schematic diagram showing a sensing unit among a fuel cell system shown in FIG. 1. The sensing unit shown in FIG. 3 is only one example, and a configuration of the sensing unit is not limited thereto.

Referring to FIG. 3, the sensing unit 850 may include a sensing cell 860 including two electrodes 861 and 862 that are in contact with the pure water, and a sensing circuit unit 870 measuring the current amount flowing through the electrodes 861 and 862 as a resistance and converting the current amount into the voltage to be amplified. The sensing unit 850 may be installed at the pure water outlet of the electrodeionization device 800, and the pure water flows between the two electrodes 861 and 862.

If the DC voltage is supplied to the two electrodes 861 and 862 of the sensing cell 860, the amount of current flowing through the pure water is inversely proportional to the electrical resistance and is proportional to the electrical conductivity. The sensing circuit unit 870 is made of a configuration measuring the current amount flowing through the two electrodes 861 and 862 and converting the measured current value into the voltage value for the amplification, and transmits the output signal to the control unit 700.

Here, a cell constant (distance/area, cm⁻¹) defined by a function of an area of the electrodes 861 and 862 and a distance between the electrodes 861 and 862 may be 0.1, and in this case, electrical conductivity measurement in a 0.5 µS/cm to 200 µS/cm range is possible. The detection unit (850) having the above-described configuration has an advantage of being able to precisely measure a very small electrical conductivity value of a solution such as ultrapure water.

On the other hand, the sensing unit 850 may be directly connected to the positive electrode 820 and the negative electrode 830 of the electrodeionization device 800 without the separate sensing cell. That is, the sensing circuit unit 870 is connected to the positive electrode 820 and the negative electrode 830 of the electrodeionization device 800, measures the current amount flowing through the positive electrode 820 and the negative electrode 830 as the resistance, and converts the current amount into the voltage to be amplified, thereby outputting the output signal.

Table 1 represents a measurement result of a theoretical value and an experimental value of the electrical conductivity depending on the impurity content of the pure water.

**(Table 1)**

| NO. | Reference value | | Measured value | | Sensing circuit unit Converting |
|---|---|---|---|---|---|
| | electrical conductivity (µS/cm) | theoretical value [(sensed voltage-0.88)/0.00176] | electrical conductivity (µS/cm) | sensed voltage (mV) 220 Ω | software converted value (sensed voltage×3) |
| 1 | 0 | 0.88 | 0 | 0.890 | 2.7 |
| 2 | 1 | 0.8817 | 1.15 | 0.890 | 2.7 |
| 3 | 2 | 0.8835 | 2 | 0.890 | 2.7 |
| 4 | 5 | 0.8888 | 4.93 | 0.898 | 2.73 |
| 5 | 10 | 0.8976 | 10 | 0.901 | 2.74 |
| 6 | 20 | 0.9152 | 18 | 0.919 | 2.8 |
| 7 | 50 | 0.9680 | 43.5 | 0.964 | 2.93 |
| 8 | 100 | 1.0560 | 91 | 1.045 | 3.17 |
| 9 | 191 | 1.2161 | 172.3 | 1.191 | 3.62 |

The quality of the pure water discharged from the electrodeionization device 800 is monitored in real time. Also, when the output signal of the sensing unit 850 is equal to or larger than a predetermined risk value, the control unit 700 stops the operations of the fuel supply unit 400, the water supply unit 500, and the air supply unit 600 so as to automatically shut down the operation of the fuel cell stack 200.

That is, when it is determined that the predetermined amount or more of the impurity is included in the pure water discharged from the electrodeionization device 800, the control unit 700 may automatically shut down the operation of the fuel cell stack 200 to prevent the scale due to the impurity from being generated inside the fuel cell stack 200 and the reformer 100. Accordingly, the performance deterioration and the cycle-life reduction of the fuel cell system due to the impurity scale may be prevented.

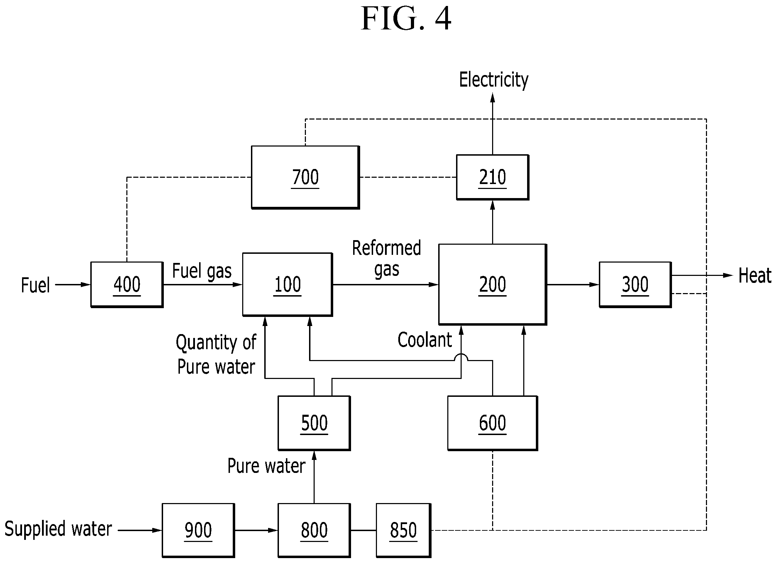

FIG. 4 is a schematic diagram of a fuel cell system according to a second exemplary embodiment of the present invention.

Referring to FIG. 4, the fuel cell system according to the second exemplary embodiment includes a pre-treatment filter 900 coupled in series to the electrodeionization device 800 on the front of the electrodeionization device 800. The pre-treatment filter 900 may be configured of an ion exchange resin filter, a reverse osmosis membrane filter, or the like, and the impurity included in the supplied water is firstly removed.

The ion exchange resin filter mainly functions to soften hard water (water with a high content of calcium and magnesium and hardness of 100 mg/L or more). The reverse osmosis filter functions to remove contaminants dissolved in water such as an organic material, an inorganic material, particulate material, turbidity components, and bacteria by using reverse osmosis.

In the fuel cell system according to the second exemplary embodiment, the rest of the configurations except for the pre-treatment filter 900 are the same as in the above-described first exemplary embodiment. The pre-treatment filter 900 requires periodic exchange, and as the sensing unit 850 and the control unit 700 measure and monitor the quality of the pure water discharged from the electrodeionization device 800 in real time, the exchange cycle of the pre-treatment filter 900 may be accurately predicted.

Accordingly, in the fuel cell system of the second exemplary embodiment, as the exchange of the pre-treatment filter 900 may be enabled according to the predicted exchange cycle, the performance deterioration and the cycle-life reduction of the supplied water due to the quality problem may be effectively prevented.

## Claims

1. A fuel cell system comprising:
a reformer (100) converting a fuel gas into a reformed gas rich in hydrogen;
a fuel cell stack (200) generating electricity by using the reformed gas;
an electrodeionization device (800) discharging pure water in which an impurity ion is removed from supplied water;
a sensing unit (850) measuring electrical conductivity of the pure water;
a water supply unit (500) supplying the pure water to the reformer (100) and the fuel cell stack (200);
a control unit (700) configured to control the operation of the fuel cell stack (200) depending on a measuring signal of the sensing unit (850);
a fuel supply unit (400) configured to supply the fuel gas to the reformer (100); and
an air supply unit (600) configured to supply air to the reformer (100) and the fuel cell stack (200), and
the control unit (700) configured to stop the operation of the fuel supply unit (400), the water supply unit (500), and the air supply unit (600) when a measuring signal of the sensing unit (850) is a predetermined risk value or more.

2. The fuel cell system of claim 1, wherein
the electrodeionization device (800) includes:
a cell (810) in which an ion exchange resin (811) is filled between a positive ion exchange membrane (812) and a negative ion exchange membrane (813); and
a positive electrode (820) and a negative electrode (830) disposed at respective sides of the cell (810) via a first space (S10) therebetween.

3. The fuel cell system of claim 2, wherein
the positive electrode (820) and the negative electrode (830) receive a fixed DC voltage from a power unit, and
the electrical conductivity of the pure water becomes 5 µS/cm to 10 µS/cm in the first space (S10) by the positive electrode (820) and the negative electrode (830) receiving the fixed DC voltage.

4. The fuel cell system of claim 2, wherein
the positive electrode (820) and the negative electrode (830) receive a DC voltage varied by a transformer from the power unit, and
the transformer controls the DC voltage so that the electrical conductivity of the pure water becomes 5 µS/cm to 10 µS/cm.

5. The fuel cell system of claim 2, wherein
the positive electrode (820) and the negative electrode (830) receive a DC voltage, and
the sensing unit (850) includes a sensing circuit unit configured to measure a current amount flowing through the positive electrode (820) and the negative electrode (830) by a resistance to be converted into a voltage and then to be amplified.

6. The fuel cell system of claim 1, wherein
the sensing unit (850) includes:
a sensing cell (860) in contact with the pure water and having two electrodes receiving a DC voltage; and
a sensing circuit unit (70) configured to measure a current amount flowing through the two electrodes by a resistance to be converted into a voltage and then to be amplified.

7. The fuel cell system of claim 1, further comprising
a pre-treatment filter (900) coupled in series to the electrodeionization device (800) on a front of the electrodeionization device (800) and firstly removing an impurity included in the supplied water.

## Patentansprüche

1. Brennstoffzellensystem, welches aufweist:
einen Reformer (100), der ein Brenngas in ein an Wasserstoff reiches reformiertes Gas umwandelt,
einen Brennstoffzellenstapel (200), der unter Verwendung des reformierten Gases Elektrizität erzeugt,
eine Elektroentionisierungsvorrichtung (800), die ein reines Wasser abgibt, in dem ein Verunreinigungsion aus dem zugeführten Wasser entfernt worden ist,
eine Erfassungseinheit (850), die die elektrische Leitfähigkeit des reinen Wassers misst,
eine Wasserversorgungseinheit (500), die das reine Wasser dem Reformer (100) und dem Brennstoffzellenstapel (200) zuführt,
eine Steuereinheit (700), die ausgestaltet ist, um den Betrieb des Brennstoffzellenstapels (200) abhängig von einem Messsignal der Erfassungseinheit (850) zu steuern,
eine Brennstoffversorgungseinheit (400), die ausgestaltet ist, um das Brenngas dem Reformer (100) zuzuführen, und
eine Luftversorgungseinheit (600), die ausgestaltet ist, um dem Reformer (100) und dem Brennstoffzellenstapel (200) Luft zuzuführen, und
wobei die Steuereinheit (700) ausgestaltet ist, um den Betrieb der Kraftstoffversorgungseinheit (400), der Wasserversorgungseinheit (500) und der Luftversorgungseinheit (600) anzuhalten, wenn ein Messsignal der Erfassungseinheit (850) ein vorbestimmter Risikowert oder mehr ist.

2. Brennstoffzellensystem nach Anspruch 1, wobei die Elektroentionisierungsvorrichtung (800) aufweist:
eine Zelle (810), in die ein lonenaustauscherharz (811) zwischen einer positiven lonenaustauschermembran (812) und einer negativen lonenaustauschermembran (813) gefüllt worden ist, und
eine positive Elektrode (820) und eine negative Elektrode (830), die an jeweiligen Seiten der Zelle (810) über einen ersten Raum (S10) dazwischen angeordnet sind.

3. Brennstoffzellensystem nach Anspruch 2, wobei
die positive Elektrode (820) und die negative Elektrode (830) eine feste Gleichspannung von einem Leistungseinheit empfangen, und
die elektrische Leitfähigkeit des reinen Wassers in dem ersten Raum (S10) 5 µS/cm bis 10 µS/cm wird, indem die positive Elektrode (820) und die negative Elektrode (830) die feste Gleichspannung empfangen.

4. Brennstoffzellensystem nach Anspruch 2, wobei
die positive Elektrode (820) und die negative Elektrode (830) eine Gleichspannung empfangen, die durch einen Transformator von der Leistungseinheit variiert wird, und
der Transformator die Gleichspannung so steuert, dass die elektrische Leitfähigkeit des reinen Wassers 5 µS/cm bis 10 µS/cm beträgt.

5. Brennstoffzellensystem nach Anspruch 2, wobei
die positive Elektrode (820) und die negative Elektrode (830) eine Gleichspannung erhalten, und
die Erfassungseinheit (850) eine Erfassungsschaltungseinheit aufweist, die ausgestaltet ist, um eine durch die positive Elektrode (820) und die negative Elektrode (830) fließende Strommenge durch einen Widerstand zu messen, der in eine Spannung umgewandelt und dann verstärkt werden soll.

6. Brennstoffzellensystem nach Anspruch 1, wobei die Erfassungseinheit (850) aufweist:
eine Messzelle (860) in Kontakt mit dem reinen Wasser und mit zwei Elektroden, die eine Gleichspannung empfangen, und
eine Erfassungsschaltungseinheit (70), die ausgestaltet ist, um eine durch die zwei Elektroden fließende Strommenge durch einen Widerstand zu messen, der in eine Spannung umgewandelt und dann verstärkt werden soll.

7. Brennstoffzellensystem nach Anspruch 1, welches ferner aufweist:
ein Vorbehandlungsfilter (900), das in Reihe mit der Elektroentionisierungsvorrichtung (800) an einer Vorderseite der Elektroentionisierungsvorrichtung (800) geschaltet ist und zuerst eine Verunreinigung entfernt, die in dem zugeführten Wasser enthalten ist.

## Revendications

1. Système de pile à combustible comprenant :
un reformeur (100) convertissant un gaz combustible en un gaz reformé riche en hydrogène ;
un empilement de pile à combustible (200) générant de l'électricité en utilisant le gaz reformé ;
un dispositif de désionisation électrique (800) refoulant de l'eau pure dans laquelle un ion d'impureté est retiré de l'eau d'alimentation ;
une unité de détection (850) mesurant la conductivité électrique de l'eau pure ;
une unité d'alimentation en eau (500) alimentant en eau pure le reformeur (100) et l'empilement de pile à combustible (200) ;
une unité de commande (700) configurée pour commander le fonctionnement de l'empilement de pile à combustible (200) en fonction d'un signal de mesure de l'unité de détection (850) ;
une unité d'alimentation en combustible (400) configurée pour alimenter en gaz combustible le reformeur (100) ; et
une unité d'alimentation en air (600) configurée pour alimenter en air le reformeur (100) et l'empilement de pile à combustible (200), et
l'unité de commande (700) étant configurée pour arrêter le fonctionnement de l'unité d'alimentation en combustible (400), de l'unité d'alimentation en eau (500) et de l'unité d'alimentation en air (600) lorsqu'un signal de mesure de l'unité de détection (850) est une valeur de risque prédéterminée ou plus.

2. Système de pile à combustible selon la revendication 1, dans lequel
le dispositif de désionisation électrique (800) inclut :
une pile (810) dans laquelle une résine échangeuse d'ions (811) remplit l'espace entre une membrane échangeuse d'ions positifs (812) et une membrane échangeuse d'ions négatifs (813) ; et
une électrode positive (820) et une électrode négative (830) disposées sur des côtés respectifs de la pile (810) via un premier espace (S10) entre celles-ci.

3. Système de pile à combustible selon la revendication 2, dans lequel
l'électrode positive (820) et l'électrode négative (830) reçoivent une tension en courant continu, CC, fixe à partir d'une unité d'alimentation, et
la conductivité électrique de l'eau pure devient de 5 µS/cm à 10 µS/cm dans le premier espace (S10) par l'électrode positive (820) et l'électrode négative (830) recevant la tension CC fixe.

4. Système de pile à combustible selon la revendication 2, dans lequel
l'électrode positive (820) et l'électrode négative (830) reçoivent une tension CC variant grâce à un transformateur de l'unité d'alimentation, et
le transformateur commande la tension CC de sorte que la conductivité électrique de l'eau pure devient de 5 µS/cm à 10 µS/cm.

5. Système de pile à combustible selon la revendication 2, dans lequel
l'électrode positive (820) et l'électrode négative (830) reçoivent une tension CC, et
l'unité de détection (850) inclut une unité de circuit de détection configurée pour mesurer une quantité de courant circulant à travers l'électrode positive (820) et l'électrode négative (830) par une résistance pour être convertie en une tension et être ensuite amplifiée.

6. Système de pile à combustible selon la revendication 1, dans lequel
l'unité de détection (850) inclut :
une cellule de détection (860) en contact avec l'eau pure et ayant deux électrodes recevant une tension CC ; et
une unité de circuit de détection (70) configurée pour mesurer une quantité de courant circulant à travers les deux électrodes par une résistance pour être convertie en une tension et être ensuite amplifiée.

7. Système de pile à combustible selon la revendication 1, comprenant en outre
un filtre de prétraitement (900) couplé en série au dispositif de désionisation électrique (800) sur un avant du dispositif de désionisation électrique (800) et éliminant avant toute chose une impureté incluse dans l'eau d'alimentation.
